(19) Europäisches Patentamt
European Patent Office
Office européen des brevets

(11) Veröffentlichungsnummer: **0 000 507**
**B1**

(12) **EUROPÄISCHE PATENTSCHRIFT**

(45) Veröffentlichungstag der Patentschrift: **29.09.82**

(51) Int. Cl.³: **C 08 F 220/28**, C 08 F 291/00, C 08 F 2/18 // A61K9/00

(21) Anmeldenummer: **78100375.1**

(22) Anmeldetag: **12.07.78**

(54) **Verfahren zur Herstellung von Hydrogelen in Form kugelförmiger Perlen grösseren Durchmessers.**

(30) Priorität: **20.07.77 US 817404**

(43) Veröffentlichungstag der Anmeldung: **07.02.79 Patentblatt 79/3**

(45) Bekanntmachung des Hinweises auf die Patenterteilung: **29.09.82 Patentblatt 82/39**

(84) Benannte Vertragsstaaten: **BE CH DE FR GB NL SE**

(56) Entgegenhaltungen:
**FR-A-2 276 063**
**US-A-2 801 992**

(73) Patentinhaber: **CIBA-GEIGY AG, Patentabteilung Postfach, CH-4002 Basel (CH)**

(72) Erfinder: **Müller, Karl Friedrich, 119 West 77th Street, New York New York 10024 (US)**
Erfinder: **Heiber, Sonia Jaworiw, 242-03 Hillside Avenue, Bellerose New York 11426 (US)**
Erfinder: **Plankl, Walter Lawrence, 2647 Loretta Street, Yorktown Heights New York 10598 (US)**

(74) Vertreter: **Zumstein, Fritz sen., Dr. et al, Bräuhausstrasse 4, D-8000 München 2 (DE)**

**EP 0 000 507 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Hydrogelen in Form von kugelförmigen Perlen grösseren Durchmessers

Die vorliegende Erfindung betrifft ein Verfahren für die Herstellung einheitlicher, kugelförmiger Perlen mit einem Durchmesser bis zu 5mm, welche aus einem vernetzten, wasserunlöslichen Hydrogel bestehen.

Hydrogele werden seit dem Jahre 1956 (US-A-2 976 576) beschrieben, und seit dieser Zeit ist eine grosse Anzahl von Patenten veröffentlicht worden, die die Herstellung und Verwendung von Hydrogelen, welche vorwiegend auf 2-Hydroxyäthylmethacrylaten und im geringeren Umfang auf N-Vinylpyrrolidonen basieren. Bezeichnenderweise sind diese Hydrogele vernetzte, in Wasser aufquellende Polymere, welche durch Copolymerisation von 2-Hydroxyäthylmethacrylaten mit einer geringen Menge an Äthylen- oder Butylendimethacrylaten hergestellt werden. Diese erwähnten Verbindungen werden als polymere, inerte Träger für aktive Substanzen verwendet, welche langsam und kontrollierbar freigegeben werden von diesen Trägerstoffen. Solche Substanzen können Arzneimittel (US-A-: 3 574 826, 3 577 512, 3 551 556, 3 520 949, 3 576 760, 3 641 237, 3 660 563), Agrarchemikalien (US-A-3 576 760) oder Aromastoffe (US-A- 3 567 118 und 3 697 643) sein. Die Verwendung dieser Hydrogele zur Herstellung von Antibeschlagschichten in feuchter Umgebung, Körperimplantaten und Wundverbänden wurden in den US-A- 3 577 516, 3 695 921, 3 512 183 und 3 674 901 beschrieben. Auch die weit verbreiteten weichen Kontaktlinsen werden aus diesem Material gemäss US-A-3 488 111 und 3 660 545 hergestellt.

Die Verwendung von arzneimittelhaltigen Hydrogelgranulaten in oraler Applikationsform ist bereits im US-A- 3 551 556 vorgeschlagen worden.

Hydrogengranulate werden bevorzugt durch Polymerisation in Suspension hergestellt. Diese wird ausgeführt, indem man eine flüssige monomere Phase in einem nicht lösenden Mittel unter starkem Rühren und mit Hilfe eines Schutzkolloides als Stabilisator suspendiert und die erhaltene gerührte Suspension auf konventionelle Weise polymerisiert. Die Polymerisation wird durch Wärme oder mit Hilfe von freien Radikalen katalytisch induziert. Diese Methode ergibt einheitlich geformte kugelförmige Perlen in einem einstufigen Verfahren und wird mehrheitlich bei der Herstellung von Polystyrolen, Polyvinylchloriden, Polyacrylaten und Polyvinylacetaten verwendet (vgl. E. Farber: Encyclopedie der Polymerwissenschaften und -technologie, Vol. 13, Seiten 552–571 (1970), Interscience, New York).

Im US-A- 3 390 050 wird die Polymerisation in Suspension von wasserlöslichen Monomeren in Gegenwart grosser Mengen aktiver Wirkstoffe beschrieben. Dieses Verfahren ist jedoch ungeeignet für die Herstellung von Hydrogelperlen für oral zu verabreichende Arzneimittel, da es unmöglich ist, das erhaltene Polymere zu reinigen, ohne das Arzneimittel herauszulaugen.

Die meisten Referenzen einer Polymerisation in Suspension eines 2-Hydroxyäthylmethacrylates weisen auf Silikonöl oder auf ein organisches Medium, wie z.B. Mineralöl oder Xylol als unlösliche Phase (US-A-: 3 567 118, 3 674 826, 3 575 123, 3 577 518, 3 678 822, 3 583 957) hin. Diese Verfahren ergeben im allgmeinen Teilchen mit sehr irregulären, unvollendeten porösen Oberflächen, die ungeeignet sind für eine Verwendung, in der die Diffusion als Arbeitsmechanismus eher eine Rolle spielt als die Adsorption und Desorption. Neben diesen Faktoren würde auch die Aufarbeitung des Polymeren im technischen Massstab ein Problem erbringen.

Die Polymerisation von 2-Hydroxyäthylmethacrylat (HEMA) in Suspension in Gegenwart von 0,5–2% an kurzkettigen Vernetzungsmitteln (eine Verbindung, die gewöhnlicherweise «Hydron» genannt wird), wobei eine wässrige Salzlösung als Medium benutz wird, wird im US-A- 3 689 634 beschrieben, wobei jedoch ein Suspensionsmittel nicht unbedingt als notwendiger Bestandteil des Rezeptes angegeben wird. Es kann jedoch gezeigt werden, dass ohne solch ein Suspensionsmittel keine brauchbaren Teilchen oder Perlen erhalten werden, sondern nur grosse Zusammenballungen des Polymeren.

Es ist jedoch bekannt, dass gewisse wasserlösliche Polymere, wie z.B. Polyvinylpyrrolidone und Hydroxyäthylzellulosen ausgezeichnete Suspensionsmittel für eine Polymerisation in Suspension sind. Es ist auch bekannt, dass gewisse schwer lösliche, anorganische Verbindungen, wie z.B. Calciumsulfat, Bariumsulfat, Calciumphosphat, Magnesiumphosphat, Calciumcarbonat und Magnesiumhydroxid auch verwendet werden können.

Die Verwendung von Magnesiumhydroxid als Suspensionsstabilisatoren für die Polymerisation von Vinylmonomeren wird im US-A- 2 801 992 beschrieben, jedoch mit dem ausdrücklichen Hinweis, dass ein Überschuss an Alkali- oder Hydroxylionen vorhanden sein muss. Magnesiumhydroxid in Abwesenheit von überschüssigen Hydroxylionen (Alkali) ist unwirksam als Suspensionsstabilisator.

Während der Überschuss von Alkali- und freien Hydroxylionen bei einigen Suspensions-Polymerisations-Systemen keine schädlichen Nebenreaktionen hervorruft, so gibt es doch viele Vinylmonomere, wie z.B. Acrylsäureester, Vinylacetate und ähnliche, welche unerwünschten durch Basen katalysierte Hydrolysen in solch einem System mit hohem pH-Wert unterworfen sind.

Die FR-A-2 276 063 betrifft die Herstellung wasserunlöslicher vernetzter hydrophiler Gele durch Polymerisation entweder eines hydrophilen Polymers aus wasserlöslichen monomeren Monoolefinen oder eines hydrophoben Copolymers aus

wasserlöslichen Monoolefinen mit 1–70% wasserunlöslichen monomeren Monoolefinen mit einem hydrophoben Polymer, welches zwei olefinische Endgruppen und ein Molekulargewicht von 400–8000 aufweist, wobei von der erstgenannten Komponente 30–90%, von der zweitgenannten 10–70% eingesetzt werden.

Die Polymerisationstemperaturen liegen dabei vorzugsweise zwischen 40 und 150° C. Als wasserlösliche Monomere werden bevorzugt Acryl- oder Methacrylsäure oder deren Ester, Amide, Imide oder Monoolefinsalze, als hydrophobe Polymere solche mit Polytetramethylenoxidketten und zwei endständigen olefinischen Gruppen verwendet. Durch Zusatz von Katalysatoren lassen sich bei 90° C unter schnellem Rühren der Mischung auch Perlen erhalten, die jedoch sehr klein und daher technisch uninteressant sind.

Die Gele können als Träger für pharmazeutisch wirksame Stoffe verwendet werden.

Man fand bei der Verwendung von anorganischen Stoffen oder von wasserlöslichen Polymeren als Suspensionsmittel heraus, dass die Hydrogelgranulate von sehr unregelmässiger Form und einer sehr porösen Oberfläche waren. Die auf diese Weise geformten Perlen sind zudem ebenfalls von einer so kleinen Grösse (beispielsweise 0,3 mm Durchmesser), dass sie keinen praktischen Wert für die langsame Freigabe von aktiven Mitteln aufweisen.

Die bevorzugten Perlengrössen für eine kontrollierbare Abgabe oraler Medikamente liegen zwischen 0,6 mm und 1,5 mm.

Es zeigte sich nun, dass man mit Hilfe eines Herstellungsverfahrens, das weitgehend demjenigen der FR-A 2 276 063 entspricht, jedoch unter Verwendung ganz bestimmter Suspensionsmittel überraschenderweise brauchbare Perlen erhält. Nach dem erfindungsgemässen Verfahren werden einheitliche, kugelförmige Hydrogelperlen bis zu einer Grösse von 5 mm Durchmesser erhalten. Diese sind für eine Anzahl pharmazeutischer und industrieller Verwendungen geeignet.

Die vorliegende Erfindung betrifft daher ein Verfahren zur Herstellung von im wesentlichen einheitlichen, kugelförmigen Perlen bis zur Grösse von 5 mm Durchmesser aus einem vernetzten, wasserunlöslichen Hydrogel durch Polymerisation in Suspension von (A) 95–30 Gew.-%, bezogen auf das Hydrogel, mindestens eines wasserlöslichen monoolefinischen Monomeren, das bis zu 70 Gew.-%, bezogen auf die Totalmenge der Monomeren, durch mindestens eine wasserunlösliche monoolefinische monomere Verbindung ersetzt sein kann, wobei das Hydrogel höchstens 60 Gew.-% der wasserunlöslichen monomeren Verbindung enthält und wobei mindestens 5 Gew.-% des Gesamtmonomers aus einem hydroxysubstituierten hydrophilen Vinylmonomeren besteht, mit (B) 5 bis 70 Gewichts-%, bezogen auf das Hydrogel, einer endständig diolefinischen, vernetzenden Verbindung mit einem Molekulargewicht von 400–8000 in Gegenwart eines Polymerisationsanregers in einer konzentrierten, wässrigen anorganischen Salzlösung und eines Suspensionsmittels und durch Behandlung des Hydrogels mit einer Säure. Das Verfahren ist dadurch gekennzeichnet, dass man als Suspensionsmittel 0,01–5 Gewichts-%, basierend auf das Hydrogel, mindestens eines wasserunlöslichen, gallertartigen, wasserbindenden, anorganischen Metallhydroxides oder Metallhydroxysalzes in Abwesenheit von überschüssigem Alkali und freien Hydroxylionen verwendet.

Wie schon angedeutet sind die Ausgangsstoffe aus der FR-A-2 276 063 bekannt.

Als wasserlösliche, durch Hydroxy substituierte Monomere sind folgende geeignet: wasserlösliche Derivate der Acryl- und/oder Methacrylsäure, wie z. B. Hydroxyalkylester, worin der Alkylrest 2–4 C-Atome enthält, beispielsweise 2-Hydroxyäthyl, 3-Hydroxypropyl-, 2-Hydroxypropyl- oder 2,3-Dihydroxypropylester, ferner äthoxylierte und polyäthoxylierte Hydroxyalkylester der Acryl- oder Methacrylsäure wie Ester von Alkoholen der Formel

$$HO - C_mH_{2m} - O - (CH_2CH_2\text{–}O)_n - H$$

worin m 2 bis 5 und n 1 bis 20 bedeuten, oder Ester von analogen Alkoholen, in denen ein Teil der Äthylenoxid-Einheit durch Propylenoxid-Einheiten ersetzt ist. Ferner sind geeignete Ester beispielsweise die 3-(Dimethylamino)-2-hydroxypropylester.

Eine andere Klasse von geeigneten Derivaten solcher Säuren sind ihre wasserlöslichen Amide oder Imide, die durch niedrige Hydroxyalkylgruppen substituiert sind, worin ein niederer Alkylrest 2–4 Kohlenstoffatome enthält, z. B. N-(Hydroxymethyl)-acrylamid und -methacrylamid, N-(3-Hydroxypropyl)-acrylamid, N-(2-Hydroxyäthyl)-methacrylamid und N-[1,1-Dimethyl-2-(hydroxymethyl)-3-oxabutyl]-acrylamid; wasserlösliche Hydrazinderivate, wie z. B. Trialkylaminomethacrylimide, z. B. Trimethylaminomethacrylimid und Dimethyl-(2-hydroxypropyl)-aminomethacrylamid und die entsprechenden Derivate der Acrylsäure.

Ferner sind auch wasserlösliche Monomere, die zur Polymerisation ein Comonomeres benötigen, geeignet, wie z. B. Hydroxyalkylester der Malein- und Fumarsäure, worin der Alkylrest 2–4 Kohlenstoffatome aufweist, wie z. B. Di-(2-hydroxyäthyl)-maleat und alkoxylierte Hydroxyalkylmaleate, Hydroxyalkylmonomaleate, wie z. B. 2-Hydroxyäthylmonomaleat und alkoxyliertes Hydroxyalkyl-monomaleat mit Vinyläthern, Vinylestern, Styrol oder allgemein Monomere, die mit Maleaten oder Fumaraten leicht copolymerisieren; Hydroxyalkyl-vinyläther, wie z. B. 2-Hydroxyäthylvinyläther, 4-Hydroxybutylvinyl-äther mit Maleaten, Fumaraten oder allgemein alle Monomere, die leicht copolymerisieren mit Vinyläthern.

Besonders wertvoll als wasserlösliche Monomere sind Hydroxyalkylacrylate und -methacrylate, wie z. B. 2-Hydroxyäthylacrylat, 2-Hydroxyäthyl-methacrylat, 2-Hydroxypropyl-acrylat, 2-Hydroxypropyl-methacrylat, 2,3-Dihydroxypropylmethacrylat. Am bevorzugtesten als Monomeres

kann das 2-Hydroxyäthyl-methacrylat bezeichnet werden.

Wasserlösliche Comonomere, die keine Hydroxygruppen enthalten, sind Acryl- und Methacrylsäuren und Alkyläther von polyäthoxylierten Hydroxyalkylestern, wie Ester von Alkoholen der Formel

$$HO - C_mH_{2m} - O - (CH_2CH_2{-}O)_n - CH_3,$$

worin m 2 bis 5 und n 4 bis 20 bedeutet.

Geeignet sind Dialkylaminoalkylester und -amide, wie z.B. 2-(Di-methylamino)-äthylacrylat und -methacrylate, als auch die entsprechenden Amide.

Ferner kommen die durch niedrige Oxaalkyl- oder niedrige Dialkylamino-alkylgruppen substituierten Amide, wie z.B. das N-(1,1-Dimethyl-3-oxa-butyl)-acrylamid; wasserlösliche Hydrazinderivate, wie z.B. Trialkylaminomethacrylimide, z.B. Trimethylamino-methacrylimide und die entsprechenden Derivate der Acrylsäure; monoolefinische Sulfonsäuren und ihre Salze, wie Natriumäthylen-sulfonat, Natriumstyrolsulfonat und 2-Acrylamido-2-methylpropan-sulfonsäure; N-[2-Dimethylamino)-äthyl]-acrylamin und -methacrylamid in Frage.

Eine weitere Klasse von wasserlöslichen Monomeren sind mono-olefinische Derivate von monocyclischen, heterocyclischen, stickstoffhaltigen Monomeren, wie z.B. N-Vinylpyrrol, N-Vinyl-succinimid, N-Vinyl-2-pyrrolidon, 1-Vinyl-imidazol, 1-Vinyl-indol, 2-Vinyl-imidazol, 4(5)-Vinylimidazol, 2-Vinyl-1-methylimidazol, 5-Vinyl-pyrazolin, 3-Methyl-5-isopropenyl-pyrazol, 5-Methylenhydantoin, 3-Vinyl-2-oxazolidon, 2- und 4-Vinylpyridin, 5-Vinyl-2-methylpyridin, 2-Vinyl-pyridin-1-oxid, 3-Isopropenylpyridin, 2- und 4-Vinyl-piperidin, 2- und 4-Vinyl-chinolin, 2,4-Dimethyl-6-vinyl-s-triazin, 4-Acryl-morpholin. Besonders hervorzuheben ist das N-Vinyl-2-pyrrolidon.

Bevorzugt unter diesen genannten Monomeren, die in einem Umfang von 0–15 Gewichts-% der totalen Monomeren benutzt werden können, sind: die Acrylsäure, Methacrylsäure, 2-Vinyl-pyridin, 4-Vinyl-pyridin, 2-(Dimethylamino)-äthyl-methacrylat, N-[2-Dimethylamino)-äthyl]-methacrylat, N-[2-(Dimethylamino)-äthyl]-methacrylamid und Natriumstyrol-sulfonat.

Besonders wertvoll als wasserlösliche Monomere sind 2-Hydroxyäthylacrylat, 2-Hydroxyäthylmethacrylat, 2-Hydroxypropylacrylat, 2-Hydroxypropylmethacrylat, 3-Hydroxypropylacrylat, 3-Hydroxypropylmethacrylat, 2,3-Dihydroxypropylacrylat, 2,3-Dihydroxypropylmethacrylat, N-Vinyl-2-pyrrolidon und N-Methylolacrylamid.

Geeignete hydrophobe Comonomere, welche in das Reaktionsgemisch eingebaut werden können, sind z.B. wasserunlösliche olefinische Monomere, wie Alkylacrylate oder -methacrylate, in welchen Alkyl 1 bis 18 C-Atome aufweist, z.B. Methyl- und Äthylmethacrylat oder -acrylat; von Alkancarbonsäuren mit 1–5 C-Atomen abgeleitete Vinylester, z.B. Vinylazetat, Vinylpropionat oder Vinylbenzoat; Acrylnitril, Styrol und Vinylalkyläther, in denen die Alkylgruppe der Ätherkette 1–5 C-Atome aufweist, z.B. (Methyl-, Äthyl-, Propyl-, Butyl- oder Amyl)-vinyläther.

Bevorzugte Verbindungen sind Alkylacrylate oder -methacrylate, in denen der Alkylrest 1 bis 18 C-Atome aufweist. Andere bevorzugte Verbindungen sind die Vinylalkyläther, in denen der Alkylrest 1 bis 5 C-Atome aufweist.

In denen endständig diolefinischen, vernetzenden makromolekularen Verbindungen (B) ist der olefinische Teil vorzugsweise ein Acylrest einer niederen α, β-mono-ungesättigten aliphatischen Monocarbon- oder Dicarbonsäure oder Vinyloxyreste. Diese Vinylteile können durch eine makromolekulare Kette mit wiederholten Ester-, Amid- oder Urethangruppen, insbesondere aber Äthergruppen vernetzt sein. Das Molekulargewicht der Kette kann vorzugsweise zwischen 600 und 5000, und ganz besonders zwischen 1500 und 3000 variieren. Demgemäss entspricht der Bestandteil (B) den Formeln

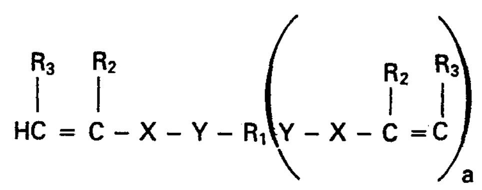

$B_1$

oder

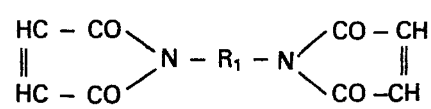

$B_2$

worin a 1 oder 2 bedeutet und $R_1$ eine Polykondensatkette bedeutet, die Kohlenwasserstoffreste enthält, die durch Äther-, Ester-, Amid-, Urethan- oder Harnstoffreste gebunden sind, $R_2$ ist Wasserstoff, Methyl oder $-CH_2COOR_4$, worin $R_4$ Wasserstoff oder eine Alkylgruppe mit 1 bis zu 10 C-Atomen bedeutet, $R_3$ ist Wasserstoff oder $-COOR_4$ mit der Bedingung, dass mindestens einer der Reste $R_2$ oder $R_3$ Wasserstoff ist, X ist Oxo, -COO- oder $-CONR_5-$, worin $R_5$ Wasserstoff oder Alkyl mit bis zu 5 C-Atomen ist und Y eine direkte Bindung oder den Rest $-R_6-Z_1-CO-NH-R_7-NH-CO-Z_2-$ bedeutet, worin $R_6$ an X gebunden ist und einen verzweigten oder geradkettigen Alkylenrest mit bis zu 7 C-Atomen bedeutet, $Z_1$ ist Oxo oder $-NR_5$, $Z_2$ ist $Z_1$ oder ein Schwefelatom und $R_7$ ist der zweiwertige Rest eines aliphatischen, alicyclischen oder aromatischen Diisocyanats mit der Bedingung, dass wenn X Oxo bedeutet, Y keine direkte Bindung ist und $R_2$ und $R_3$ Wasserstoff bedeuten. Das Symbol a bedeutet vorzugsweise 1.

In den Verbindungen der Formeln $B_1$ und $B_2$ bedeutet $R_1$ insbesondere eine Polypropylenoxid- oder eine Polytetramethylenoxidkette, oder eine Kette, die aus einem Polyäthylenoxid-polypropylenoxid Copolymerenblock besteht, aber es kann

auch eine von Dicarbonsäuren, Diolen, Diaminen oder Diisocyanaten abgeleitete Kette bedeuten, die durch bekannte Polykondensationsverfahren erhalten werden. R1 kann auch eine ein Polysiloxan enthaltende Kette bedeuten. Die endständigen Reste der Verbindung der Formel $B_1$ entsprechen den Definitionen von $R_2$ und $R_3$, und, wenn X -COO- oder -$CONR_5$- bedeutet, leitet sich der Acylrest ab von der Acryl- oder Methacrylsäure oder den Monoalkylestern von der Malein-, Fumar- oder Itaconsäure, oder von Monoalkylestern dieser Säuren mit gerad- oder verzweigtkettigen Alkanolen mit 1 bis 10 C-Atomen, wie z.B. Methanol, Äthanol, Propanol, Butanol, Diisobutylalkohol oder Decanol, oder, wenn X Sauerstoff bedeutet, mit dem Vinyloxyrest von Vinyläthern. Verbindungen der Formel $B_1$, worin Y eine direkte Bindung ist, sind Diester von makromolekularen Diolen, worin zwei Hydroxygruppen an die Polykondensatkette $R_1$ in gegenüberliegend endständigen oder nahezu endständigen Stellungen gebunden sind, mit α, β-ungesättigten Säuren. Solche Diester können aus den genannten makromolekularen Diolen durch bekannte Acylierungsverfahren hergestellt werden, indem reaktionsfähige funktionelle Derivate von geeigneten Säuren, z.B. Acryl- oder Methacrylsäurechlorid, oder von Monoalkylester von Malein-, Fumar- oder Itaconsäure verwendet werden. Verbindungen der Formel $B_1$ mit der Amidgruppe X sind Diamide, welche aus makromolekularen Diaminen durch bekannte Acylierungsverfahren erhalten werden, z.B. durch Verwendung der oben genannten Säurechloride oder -anhydride. Die makromolekularen Diamine werden z.B. hergestellt aus den entsprechenden makromolekularen Diolen mit der doppelt molaren Menge an Alkylenimin, wie z.B. Propylenimin. Die makromolekularen Bis-maleinamidsäuren werden erhalten gemäss der beschriebenen Reaktion durch Verwendung von Maleinsäureanhydrid als Acylierungsmittel für makromolekulare Diamine unter Erwärmen oder Umsetzung mit Entwässerungsmitteln zur Herstellung von makromolekularen Bis-maleinimidoverbindungen der Formel $B_2$. In diesen Verbindungen kann $R_1$ z.B. eine der makromolekularen Polykondensatketten sein, die als Bestandteile der Verbindungen gemäss Formel $B_1$ genannt werden.

Nach der Definition von Formel $B_1$ kann Y ferner einen zweiwertigen Rest -$R_6$-$Z_1$-CONH-$R_7$-NH-CO-$Z_1$ bedeuten. Darin ist $R_6$ z.B. Methylen, Propylen, Trimethylen, Tetramethylen, Pentamethylen, Neopentylen (2,2-Dimethyltrimethylen), 2-Hydroxytrimethylen, 1,1-Dimethyl-2-(1-oxoäthyl)-trimethylen oder 1-(Dimethylenaminomethyl)-äthylen und insbesondere Äthylen. Der zweiwertige Rest $R_7$ leitet sich von einem organischen Diisocyanat ab und ist ein aliphatischer Rest wie Alkylen, z.B. Äthylen, Tetramethylen, Hexamethylen, 2,2,4-Trimethylhexamethylen, 2,4,4-Trimethylhexamethylen, Fumaroyldiäthylen oder 1-Carboxypentamethylen; ein cycloaliphatischer Rest, z.B. 1,4-Cyclohexylen oder 2-Methyl-1,4-cyclohexylen; ein aromatischer Rest, wie m-Phenylen, p-Phenylen, 2-Methyl-m-phenylen, 1,2-, 1,3-, 1,5-, 1,6-, 1,7-, 1,8-, 2,3- und 2,7-Naphthylen, 4-Chlor-1,2- und 4-Chlor-1,8-naphthylen, 1-Methyl-2,4-, 1-Methyl-2,7-, 4-Methyl-1,2-, 6-Methl-1,3- und 7-Methyl-1,3-naphthylen, 1,8-Dinitro-2,7-naphthylen, 4,4′-Diphenylen, 3,3′-Dichlor-4,4′-diphenylen, 3,3′-Dimethoxy-,4,′-diphenylen, 2,2′-Dimethyl- und 3,3′-Dimethyl-4,4′-diphenylen, 2,2′-Dichlor-5,5′-dimethoxy-4,4′-diphenylen, Methylen-di-p-phenylen, Methylen-bis-(3-chlorphenylen), Äthylendi-p-phenylen oder Hydroxydi-phenylen.

Wenn im Formelteil $B_1$ das Symbol Y keine direkte Bindung ist, muss $R_6$ immer mit X verbunden sein.

Es sind deshalb Verbindungen der Formel $B_1$, in denen Y den genannten zweiwertigen Rest bedeutet, Bisvinyläther, wenn X Sauerstoff bedeutet, oder Bis-acrylate, Bis-methacrylate, Bis-maleate, Bis-fumarate und Bis-itaconate, wenn X -COO- oder -$CONR_5$ ist.

$R_1$ wird insbesondere von Diolen und Diaminen mit einem Molekulargewicht von etwa 200–8000 abgeleitet. Geeignete solche Diole sind Polyäthylenoxiddiole eines Molekulargewichtes 500–3000, Polypropylenoxiddiole von einem Molekulargewicht von 500–3000, Poly-n-butylen-oxiddiole von einem Molekulargewicht von 500–3000, Poly-(blockäthylen-oxid-co-propylenoxid)diole von einem Molekulargewicht von 500–3000, worin die Prozentangabe von Äthylenoxideinheiten zwischen 10 und 90% variieren kann, oder Polyesterdiole von einem Molekulargewicht von 500–3000, welche nach bekannten Methoden der Polykondensation aus Diolen und Dicarbonsäure, wie z.B. aus Propylenglykol, Äthylenglykol, Butandiol oder 3-Thia-pentandiol und Adipinsäure, Terephthalsäure, Phthalsäure oder Maleinsäure erhalten werden, welche auch Diole der oben genannten Polyäthertypen enthalten können.

In gleicher Weise geeignet sind Diamine mit einem Molekulargewicht von 500–4000, insbesondere die Bis-amino-propyläther der oben genannten Diole, wie z.B. die Bis-3-aminopropyläther des Polyäthylenoxids und Polypropylenoxiddiols.

Eine bevorzugte Ausführungsform des vorliegenden Verfahrens besteht in der Verbindung (B), in welchem $R_1$ eine Polyäthylenoxid-, Polypropylenoxid- oder Polytetramethylenoxidkette mit einem Molekulargewicht von 600–4000 oder eine Kette bedeutet, die man durch Kondensation einer aliphatischen, alicyclischen oder aromatischen Dicarbonsäure oder eines entsprechenden Diisocyanates mit einem aliphatischen Diol oder Diamin erhält.

Die bevorzugten Verbindungen (B) bestehen aus Polyalkylenätherglykolen, insbesondere Polytetramethylenoxidglykolen von einem Molekulargewicht von etwa 600 bis ungefähr 4000, insbesondere 1500–3000, zuerst abgesättigt mit 2,4-Toluol-diisocyanat oder Isophoron-diisocyanat und mit 2 Mol eines Hydroxyalkylacrylates oder -Methacrylates endabgesättigt, worin «Alkyl» einen Rest mit 2–4 C-Atomen bedeutet.

Andere bevorzugte makromolekulare Verbindungen ($B_1$) sind solche, in denen $R_1$ von einem Polysiloxan, welches Diole, Triole oder Dithiole enthält, abgeleitet wird. Diese mit Di- oder Polyfunktionen versehenen Polysiloxane können 2 verschiedene Strukturen aufweisen:

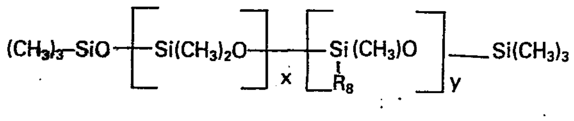

oder

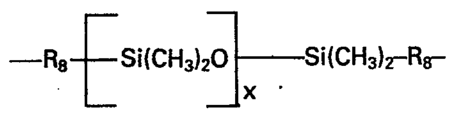

worin $R_8$ eine gerade oder verzweigte Alkylenkette mit 1–7 C-Atomen oder eine $-(CH_2CHO)_n$-Gruppe,
$R_9$
worin n 1 bis 20 ist, $R_9$ Wasserstoff oder Methyl ist, bedeutet, und X eine Zahl von 3 bis 120 und Y 2 oder 3 bedeuten.

Diese Polysiloxanverbindungen werden bevorzugt mit Isophorondiisocyanat oder 2,4-Toluoldiisocyanat endabgesättigt und mit einem Überschuss 2-Hydroxyäthylmethacrylat, 2-Hydroxyäthylacrylat oder 2-Hydroxypropylacrylat umgesetzt.

Verbindungen der Formel $B_1$, in der Y einen zweiwertigen Rest $-R_6Z_1CONHR_7-NH-CO-Z_2-$bedeutet, werden in einer 2-stufigen Reaktion erhalten, wobei man zuerst makromolekulare Diole oder Diamine, z.B. Verbindungen, die 2 Hydroxy- oder Aminogruppen an der Polykondensatkette haben, $R_1$ in gegenüberliegender End- oder fast in Endstellung, mit mindestens der zweifachen molaren Menge an aliphatischen, cycloaliphatischen oder aromatischen Diisocyanaten, die zwei Isocyanatgruppen enthalten, die an den Rest $R_7$ gebunden sind, umsetzt, und zweitens die so erhaltenen makromolekularen Diisocyanate mit einer Verbindung der Formel

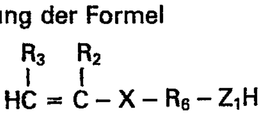 (C)

worin $R_2$, $R_3$, X, $R_6$ und $Z_1$ die oben angegebenen Bedeutungen für $B_1$ haben, reagieren lässt.

Wenn X Sauerstoff bedeutet, dann bedeutet (C) einen Vinyläther, der ein aktives Wasserstoffatom enthält, wie z.B. einen Hydroxyalkylvinyläther oder einen Aminoalkylvinyläther. Wenn X die -COO- oder $-CONR_5$-Gruppe bedeutet, dann ist (C) ein Acrylat, Methacrylat, Maleat, Fumarat, Itaconat oder ein entsprechendes Amid, welche ein aktives Wasserstoffatom in der Alkylgruppe enthalten.

Vorzugsweise enthält das Gemisch der Monomeren (A) und makromolekularen Verbindungen (B) 20–100% eines hydroxysubstituierten Vinylmonomeren und 0–40% eines wasserunlöslichen Vinylmonomeren, insbesondere 40–100% eines hydroxysubstituierten Vinylmonomeren und kein wasserunlösliches Monomer.

Die freie Radikal-Polymerisation wird mittels eines Katalysators, der freie Peroxy- oder Alkylradikale in genügend hoher Konzentration erzeugen kann, eingeleitet, um die Polymerisation des angewendeten Vinylmonomeren bei der Synthesetemperatur herbeizuführen. Diese Katalysatoren sind vorzugsweise Peroxid- oder Azokatalysatoren, die eine Halbwertzeit von mindestens 20 Minuten bei der Polymerisationstemperatur aufweisen. Beispiele von geeigneten Katalysatoren sind Diisopropylperoxidicarbonate, tert.-Butylperoktoat, Benzoylperoxid, Decanoylperoxid, Lauroylperoxid, Bernsteinsäureperoxid, Methyl-äthylenketonperoxid, tert.-Butylperoxyazetat, Propionylperoxid, 2,4-Dichlorbenzylperoxid, tert.-Butylperoxypivalat, Pelargonylperoxid, 2,5-Dimethyl-2,5-bis(2-äthylhexanoyl-peroxy)-hexan, p-Chlorbenzoylperoxid, tert.-Butylperoxybutyrat, tert.-Butylperoxymaleinsäure, tert.-Butyl-peroxyisopropylcarbonat, bis-(1-Hydroxy-cyclohexyl)-peroxid; die Azoverbindungen sind: 2,2'-Azo-bis-isobutyronitril, 2,2'-Azo-bis-(2,4-dimethylvaleronitril), 1,1'-Azo-bis-(cyclohexancarbonitril), 2,2'-Azo-bis-(2,4-Dimethyl-4-methoxyvaleronitril).

Die Menge des Katalysators kann zwischen 0,01–1 Gewichts-% des Monomeren (A) und der makromolekularen Verbindung (B). Vorzugsweise beträgt sie zwischen 0,03–0,3 Gewichts-%.

Das verwendete Suspensionsmittel wird am Ende der Suspensionspolymerisation durch Zugabe einer Säure, beispielsweise von Salzsäure, aufgelöst. Die Hydrogelperlen werden durch Filtration isoliert.

Die obenerwähnten Monomeren oder Polymeren Verbindungen, Katalysatoren sowie ihre Mengenverhältnisse sind alle in der FR-A 2 276 063 beschrieben.

Das erfindungsgemässe Verfahren wird normalerweise in einem Reaktionsgefäss, welches mit Rückflusskühler, Stickstoffdurchfluss, Wärmeregulator und äusserst wichtig mit einem Rührer besonderer Gestaltung, der eine gute Vermischung bei niedriger Geschwindigkeit zulässt, versehen ist, durchgeführt. Vorzugsweise werden im Labor die ankerähnlichen Glasrührer, die mit einem Rührmotor verbunden sind, dessen Geschwindigkeit leicht regulierbar ist, verwendet. Für eine typische Synthese wird die wässrige Lösung des Salzes zuerst in das Reaktionsgefäss mit einem löslichen Magnesium- oder Aluminiumsalz vorgelegt. Die Lösung wird dann auf die Polymerisationstemperatur erhitzt und das gallertartige Metallhydroxid wird dann durch Zugabe einer berechneten Menge einer wässrigen Base ausgefällt. Nach diesem Schritt wird die Rührgeschwindigkeit, wenn notwendig, gedrosselt, um Perlen gegebener Grösse zu erhalten. Niedrige Geschwindigkeiten führen zu grösseren Perlen und höhere Geschwindigkeiten zu kleineren Perlen. Das Gemisch (A) und (B), welches den Katalysator bereits gelöst enthält, wird nun zugefügt und die Umsetzung unter Stickstoff bei konstanter Temperatur und Rührgeschwindigkeiten während mindestens 3 Stunden gehalten. Danach wird während 1 Stunde bei 100° C unter Rückfluss erhitzt. Das Reaktionsgemisch wird dann auf Raumtemperatur abgekühlt und genügend organische Säure, beispielsweise Essigsäure, oder Mineralsäure wird hinzugefügt, um das Metallhydroxid zu lösen. Die Perlen werden nun abfiltriert, vom oberflächlichen Salzwasser abgewaschen, dann im Wasser oder Alkoholen eingeweicht, um nicht umgesetzte Monomere zu extrahieren, und getrocknet.

Als wässrige Salzlösung kann jedes wasserlösliche anorganische Salz einer Konzentration von 5–25 Gewichts-% verwendet werden; in der Praxis verwendet man jedoch ein billiges, käufliches Chlorid oder Sulfat eines Alkali- oder Erdalkalimetalls, beispielsweise Natriumchlorid, Kaliumsulfat, Magnesiumchlorid und Magnesiumsulfat. Diese können einzeln oder auch als Gemisch in einer Konzentration, die an die Löslichkeitsgrenze in Wasser herankommt, verwendet werden. Als allgemeine Regel gilt, je höher die Salzkonzentration, umso niedriger ist die Menge von wasserlöslichen Monomeren, welche in der wässrigen Phase gelöst ist, und gleichzeitig umso einheitlicher ist die kugelförmige Hydrogelperle. Ganz besonders bevorzugt wird Natriumchlorid in einer Konzentration von 20 Gewichts-% in Wasser verwendet.

Die als Suspensionsmittel verwendeten Metallhydroxide des vorliegenden Verfahrens können hergestellt werden, indem man, vorzugsweise in situ, zu einer wässrigen Lösung eines wasserlöslichen Metallsalzes (Chlorid, Nitrat, Sulfat etc.) Alkali, gewöhnlich 1-n Natronlauge, in der Menge hinzufügt, die jedoch die stöchiometrische Menge nicht übersteigt, die für die Bildung des Metallhydroxids oder eines Metallhydroxidsalzes, wo nicht alle Wertigkeiten des Metallions mit Hydroxylgruppen abgesättigt sind, notwendig ist.

Vorzugsweise sind die Metallhydroxide von Magnesium, Aluminium, Zirkonium, Eisen, Nickel, Chrom, Zink, Blei, Calcium, Kobalt, Kupfer, Zinn, Gallium, Mangan, Strontium, Barium, Uran, Titan, Lanthan, Thorium und Cer geeignet, um als Suspensionsmittel für das vorliegende Verfahren verwendet zu werden.

Die Hydroxide gewisser Übergangsmetalle, wie z.B. Mangan, Eisen und Chrom sind ausgezeichnete Suspensionsmittel, sind jedoch nicht unbedingt die Hydroxide der Wahl, da sie mit der freien Radikalpolymerisation durch Elektronentransferreaktionen in Konflikt geraten könnten. Auch die Eigenfarbe behindert die Verwendung, da diese in den Hydrogelperlen unerwünscht ist.

Als bevorzugtes Suspensionsmittel gilt Magnesium- oder Aluminiumhydroxid oder Magnesiumhydroxysalz oder Aluminiumhydroxysalz, wie die basischen Chloride.

Der Quellungsgrad (DS) in Wasser wird bestimmt, indem man eine bestimmte Gewichtsmenge von Perlen bis zum Eintreten eines Gleichgewichtes quellen lässt; man wiegt die gequollenen und die getrockneten Perlen.

$$\text{Quellungsgrad DS} = \frac{\text{Gewicht der gequollenen Substanz} - \text{Gewicht der trockenen Substanz}}{\text{Gewicht der trockenen Substanz} \times 100}$$

Die Durchschnittsgrösse der Teilchen (M.P.S.) wird als die Zahl in Millimeter angegeben, bei der die Verteilungskurve der Teilchengrösse, erhalten durch Sieben der Gesamtmenge von Kügelchen durch eine Reihe von Sieben mit Maschengrössen von 8–50 mesh, die 50%-Linie durchschneidet.

In den folgenden Beispielen bedeuten die Temperaturgrade Celsiusgrade und die Prozentangaben Gewichtsprozente.

Beispiel 1:

Ein glattwandiger 1000 ml Kunststoffkolben wird mit einem Rückflusskühler, Stickstoffeinleitröhrchen, Thermometer, welches mit einem Wärmeregler verbunden ist, einem Trenngitter und einem ankerähnlichen Rührer, der durch einen regulierbaren Motor angetrieben wird, versehen. Ein langsamer Stickstoffstrom wird während der ganzen Reaktion durchgeleitet.

In den Kolben werden 360 g einer 20% wässrigen Natriumchloridlösung und 23,0 g festes Magnesiumchlorid-Hexahydrat vorgelegt. Die Lösung wird langsam bei schnellem Rühren auf 80° erhitzt. Zu dieser Lösung werden tropfenweise 123 ml (0,123 Mol) einer 1-n Natronlauge hinzugegeben, wobei ein feiner, gallertartiger Niederschlag von Magnesiumhydroxid im Reaktionskolben anfällt.

Nachdem die Gesamtmenge an Natronlauge hinzugefügt worden ist, wird die Rührgeschwindigkeit auf 150 Umdrehungen/Min reduziert und ein Gemisch aus Monomer (A) und der makromolekularen Verbindung (B), worin 0,2 g tert.-Butylperoktoat als Initialkatalysator für die Herstellung freier Radikale gelöst wird, hinzugefügt. Das Gemisch aus (A) und (B) wird hergestellt, indem man 60 g (etwa 0,024 Mol) eines Polytetramethylenoxid-glykols (Durchschnittsmolekulargewicht 2000) endständig mit Isophorondiisocyanat versehen, in 140 g (1,08 Mol) 2-Hydroxyäthylmethacrylat (HEMA) löst und 72 Stunden lang bei Raumtemperatur zur Reaktion bringt.

Nach Ablauf dieser Reaktionszeit wird das Verschwinden der endständigen Isocyanatgruppen durch das Verschwinden der charakteristischen Infrarot-Spektral-Banden bei 2270 $cm^{-1}$ (charakteristisch für die Isocyanatgruppe) nachgewiesen.

Das Reaktionsgemisch, das einen pH-Wert von 7,8 aufweist, wird unter Stickstoff bei 150 Umdrehungen/Min 3 Stunden lang bei 80° gerührt. Anschliessend wird die Temperatur für 1 Stunde auf 100° erhöht, auf Raumtemperatur abgekühlt. Anschliessend werden 10 ml konz. Salzsäure hinzugegeben, um das Magnesiumhydroxid als Suspensionsmittel zu lösen. Das Reaktionsgemisch

wird durch ein sehr feinwandiges Tuch filtriert, und die dann isolierten Perlen werden mit 2000 ml Wasser gewaschen und über Nacht in 500 ml Äthanol eingetaucht, um verbliebene Monomere zu entfernen. Die erhaltenen Perlen werden durch einen aus Polyestertuch hergestellten Sack filtriert. Der zugenähte Sack wird mit dem Inhalt in einem Wäschetrockner getrocknet. Man erhält einheitliche, kugelförmige Perlen in einer Ausbeute von 193 g (96,5% d.Th.) mit einem Durchschnittsdurchmesser von 1,02 ± 0,3 mm, die einen Quellungsgrad in Wasser von 37% ($DS_{H_2O}$) aufweisen.

Falls man das Mengenverhältnis (B) zu (A) vergrössert, nimmt auch die Durchschnittsgrösse der Perlen zu und der Quellungsgrad in Wasser ab.

Beispiel 2:

Man geht in gleicher Weise vor wie in Beispiel 1 beschrieben, verwendet jedoch als (A) 47,5 g HEMA und 5 g N-Vinylpyrrolidon (NVP) und als (B) 47,5 g des in Beispiel 1 verwendeten Polytetramethylenoxid-glykols. Man erhält Hydrogelperlen mit einer Durchschnittsgrösse von 1,1 mm und einem Quellungsgrad DS in $H_2O$ von 21%.

Ein Ansteigen der NVP-Menge im Hydrogel bewirkt ein Ansteigen des Quellungsgrades.

Beispiele 3–8:

Geht man vor wie im Beispiel 1 beschrieben, jedoch unter Verwendung verschieden substituierter makromolekularer Verbindungen (B), die von Polytetramethylenoxid-glykolen, die endständig mit Isophoron-diisocyanat (IPDI) abgesättigt sind, abgeleitet werden, so erhält man Hydrogele Perlen folgender Eigenschaften:

| Beispiel | % HEMA (Gew.-%) (A) | % NVP (Gew.-%) (A) | Verbindung (B) Diole endständig abgesättigt mit IPDI | Gewichts-% | Durchschnittsgrösse der Perlen (mm) | $DS_{H_2O}$ % |
|---|---|---|---|---|---|---|
| 3 | 36 | 10 | Polypropylenoxid (MW: 1165) | 54 | 2,5 | 20,2 |
| 4 | 55 | – | Polypropylenoxid (MW: 1950) mit Äthoxy abgesättigt | 45 | 3,1 | 31,8 |
| 5 | 60 | – | Polyäthylenoxid (MW: 1570) | 40 | 1,8 | 86,3 |
| 6 | 36 | 10 | Pluronic L-64 | 54 | 3,5 | 85,6 |
| 7 | 60 | – | Pluronic L-42 | 40 | 2,0 | 33,5 |
| 8 | 60 | – | Polyäthylenadipat (MW: 1900) | 40 | 2,1 | 14,4 |

Pluronic: Polyäthoxyliertes Polypropylenoxid
L-64: MW 3490; PPO/PEO = 21/20 Einheiten
L-42: MW 2020; PPO/PEO = 30/40 Einheiten

Es wird in gleicher Weise vorgegangen, wie im Beispiel 1 beschrieben, jedoch werden 3,15 g (0,005 Mol) Aluminiumsulfat-hexadecahydrat anstelle des Magnesiumchlorid-hexahydrates und 31 ml (0,031 Mol) 1-n Natronlauge für die Herstellung von Aluminiumhydroxid als Suspensionsmittel verwendet.

Das Gemisch an Monomeren (A) und makromolekularer Verbindung (B) wird hergestellt, indem man 96 g Polytetramethylenoxidglykol (Durchschnittsmolekulargewicht ca. 2000), welches endständig mit Isophorondiisocyanat abgesättigt ist, in 64 g 2-Hydroxyäthylmethacrylat und 40 g Acrylsäure löst und neutralisiert, bevor die Polymerisation beginnt.

Man erhält einheitliche kugelförmige Perlen, die einen Durchschnittsdurchmesser von 1,02 mm ± 0,2 mm in einer Ausbeute von 180 g (90% d.Th.) aufweisen. Der Quellungsgrad ist vom pH abhängig, wobei man bei einem pH 3 einen Quellungsgrad von 65,4% und einem pH 8 einen solchen von 75,8% erhält.

Beispiel 10:

Man geht in gleicher Weise wie im Beispiel 1 beschrieben vor, jedoch werden 0,2 g Azobisisobutyronitril anstelle von tert.-Butylperoktoat als Initialkatalysator für die Peroxy-Katalyse verwendet.

Das verwendete Gemisch aus (A) und (B) wird hergestellt, indem man 84 g Polytetramethylenoxidglykol (Durchschnittsmolekulargewicht 2000), endständig abgesättigt mit Isophorondiisocyanat, in 56 g 2-Hydroxyäthylmethacrylat und 60 g N-(2-Dimethylamino)-äthylmethacrylat löst.

Man erhält 193 g einheitliche kugelförmige Perlen (Ausbeute 96,5% d.Th.) mit einem Durchschnittsdurchmesser von 1,02 ± 0,4 mm. Der Quellungsgrad ist pH-abhängig, wobei man folgende Werte $DS_{pH3}$ von 83,2% und $DS_{pH8}$ von 71,1% erhält.

Beispiel 11:

Geht man vor, wie im Beispiel 1 beschrieben, wobei man jedoch anstelle der 140 g 2-Hydroxyäthylmethacrylat ein Gemisch aus 40 g 2-Hydroxyäthylmethacrylat und 100 g 3-Hydroxypropylmethacrylat einsetzt, so erhält man einheitliche kugelförmige Perlen in einer Ausbeute von 193 g (96,5% d.Th.) mit einem Durchschnittsdurchmesser von 1,02 ± 0,3 mm und einem Quellungsgrad in Wasser von $DS_{H_2O}$ von 37,9%.

Beispiel 12:

In analoger Weise wie im Beispiel 1 beschrieben werden Hydrogelperlen hergestellt, indem man als Mono-Gemisch aus (A) und (B) 24g Polytetramethylenoxid-glykol (MW 2000), welches endständig mit Isophorondiisocyanat abgesättigt ist, in 42g 2-Hydroxyäthylmethacrylat, 54g N-Vinyl-2-pyrrolidon und 80g Methoxypolyäthylenglykolmethacrylat, welches im Durchschnitt 9 Äthoxyeinheiten enthält, löst. Man erhält einheitliche runde Perlen mit einem Durchschnittsdurchmesser von 0,72mm und einem Quellungsgrad ($DS_{H_2O}$) von 27,2%.

Beispiel 13:

In analoger Weise wie im Beispiel 1 beschrieben, werden Hydrogelperlen hergestellt, indem man 33,3g einer 60%-igen wässrigen Lösung von N-Methylolacrylamid mit 171g eines Gemisches aus 40% Polytetramethylenoxidglykol (MW 2000), endständig abgesättigt mit 2 Molen Isophorondiisocyanat, und 60% 2-Hydroxyäthylmethacrylat und erhält 180g (85% d.Th.) einheitliche runde Perlen mit einem Durchmesser von 1,10mm und einem Quellungsgrad ($DS_{H_2O}$) von 32%.

Beispiel 14:

Man geht vor, wie unter Beispiel 1 beschrieben, ersetzt jedoch das Gemisch (A) und (B) durch 80g eines Polysiloxanpolyols (Q 4-3557 von Dow Corning), endständig abgesättigt mit Isophorondiisocyanat, gelöst in 89,2g 2-Hydroxyäthylmethacrylat und 30,8g N-Vinylpyrrolidon.

Man erhält 192g (Ausbeute 96% d.Th.) einheitliche, kugelförmige Perlen mit einem Durchschnittsdurchmesser von 1,02 ± 0,4mm und einem Quellungsgrad $DS_{H_2O}$ von 39,8%.

Beispiel 15:

In analoger Weise wie in Beispiel 1 beschrieben werden 115g Natriumchlorid in 310g Wasser gemeinsam mit 25g (0,247 Äquivalente) Magnesiumchloridhexahydrat gelöst.

Es bildet sich ein einer, gallertartiger Niederschlag von Magnesiumhydroxid bei Zugabe von 123ml 1-n Natronlauge unter starkem Rühren.

Das Gemisch (A) + (B), welches in diesem Beispiel verwendet wird, wird hergestellt, indem man 107,5g Polydimethylsiloxandiol der Formel

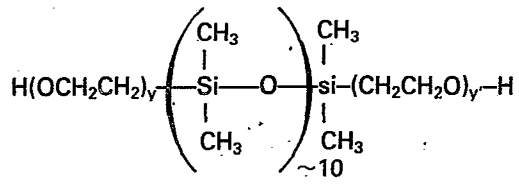

$y + y' = 26$

erhältlich von Dow Corning als Q 4-3667, endständig abgesättigt mit Isophorondiisocyanat, in 107,5g 2-Hydroxyäthylmethacrylat löst.

Es werden einheitliche, kugelförmige Perlen (200g, 93% d.Th.) erhalten, die einen Durchschnittsdurchmesser von 1,66 ± 0,5mm und einen Quellungsgrad $DS_{H_2O}$ von 28,1% aufweisen.

Beispiele 16–20:

In analoger Weise wie im Beispiel 1 beschrieben werden unter Verwendung derselben Reaktionsteilnehmer mit Ausnahme der Metallhydroxide als Suspensionsmittel folgende Hydrogele hergestellt:

| Beispiel | Metallsalz, g | 1-n NaOH, ml | Hydrogel Ausbeute in g | % | Durchschnittsdurchmesser, mm | $DS_{H_2O}$ (%) |
|---|---|---|---|---|---|---|
| 16 | Zirkoniumsulfat · 4 $H_2O$ 11 | 123 | 194 | 97 | 0,94 | 35,5 |
| 17 | Nickelchlorid · 6 $H_2O$ 14.7 | 123 | 198 | 99 | 1,00 | 36 |
| 18 | Eisenchlorid 6.6 | 123 | 192 | 96 | 0,97 | 36,3 |
| 19 | Aluminiumsulfat · 16 $H_2O$ 13.2 | 123* | 192 | 96 | 0,98 | 36 |
| 20 | Chromchlorid · 6 $H_2O$ 10.9 | 123 | 195 | 97.5 | 0,96 | 35,8 |

* Verwendet man in Beispiel 19 nur 90% der äquivalenten Menge an Natronlauge, d.h. 112ml 1-n NaOH, erhält man bei einem pH-Wert der Mischung von 7 Perlen mit einem Durchschnittsdurchmesser von 1mm in guter Ausbeute.

Beispiele 21–27:

Man geht vor wie im Beispiel 1 beschrieben und verwendet zur Herstellung von Hydrogelperlen aus einem Gemisch (A) + (B) eine Lösung von 24g Polytetramethylenoxidglykol des Molekulargewichts 2000, endständig mit Isophorondiisocyanat abgesättigt, in 42g 2-Hydroxyäthylmethacrylat, 54g N-Vinyl-2-pyrrolidon und 80g einer der unten aufgezählten wasserunlöslichen Comonomeren.

| Beispiel | Comonomere | % | Perlengrösse, mm | $DS_{H_2O}$, % |
|---|---|---|---|---|
| 21 | Äthylacrylat | 90 | 0,90 | 63 |
| 22 | 2-Äthylhexylacrylat | 95 | 0,86 | 32 |
| 23 | Äthylmethacrylat | 91,5 | 0,92 | 61 |
| 24 | Methylmethacrylat | 93 | 0,52 | 60 |
| 25 | Methylacrylat | 95 | 0,78 | 83 |
| 26 | Octadecylmethacrylat | 95 | 0,50 | 41 |
| 27 | Dioctylfumarat | 95 | 0,85 | 32 |

Die Umsetzungen verlaufen alle glatt und ergeben Perlen mit einem Quellungsgrad und Durchmesser, die als Durchschnittswerte zu bezeichnen sind.

Beispiel 28:

Ein glattwindiger 1000ml Kunststoffkolben wird mit einem Rückflusskühler, Stickstoffeinleitröhrchen, Thermometer, welches mit einem Temperaturregler versehen ist, einem Trenngitter und einem ankerähnlichen Rührer, der durch einen regulierbaren Motor angetrieben wird, versehen.

In den Kolben werden 360g einer 20%-igen wässrigen Natriumchloridlösung und 13,2g Aluminiumsulfat-Hexadecahydrat vorgelegt. Die Lösung wird langsam auf 80° erwärmt und 160ml 1-n Natronlauge werden unter starkem Rühren tropfenweise zugefügt. Ein langsamer Stickstofffluss wird im Kolben aufrechterhalten. Nach Zugabe der gesamten Natronlauge wird die Rührgeschwindigkeit auf 150 Umdrehungen/Min. heruntergesetzt und 196g eines vollständig umgesetzten Gemisches, bestehend aus 29,4% Poly-n-butylenoxid (MW 2000), welches mit 2 Molen Isophorondiisocyanat endständig abgesättigt ist, 68,6% 2-Hydroxyäthylmethacrylat, 2% Natriumstyrolsulfonat, dem 2g Wasser und 0,2g tert.-Butylperoktoat als Initialkatalysator beigegeben wurden, hinzugefügt. Drei Stunden lang wird die Temperatur auf 80° gehalten, wobei man konstant mit 150 Umdrehungen/Min. unter einem Stickstoffmantel rührt. Nach 3 Stunden wird die Temperatur 1 Stunde lang auf 100° erhöht und anschliessend der Kolben auf Zimmertemperatur abgekühlt. Zu diesem Reaktionsgemisch werden 10ml konz. Salzsäure hinzugegeben, um das Aluminiumhydroxid zu lösen. Der Inhalt des Kolbens wird wie oben beschrieben durch ein feinmaschiges Käsereituch filtriert, mit 2l Wasser gewaschen und über Nacht in 500ml Äthanol eingeweicht, um die restlichen Monomeren zu extrahieren. Wie in Beispiel 1 beschrieben, werden die Perlen filtriert und getrocknet. Man erhält 180g einheitliche, runde Perlen mit einem Durchschnittsdurchmesser von 0,85mm. Der Quellungsgrad ist pH-abhängig und beträgt bei pH 1 ($DS_{pH\ 1}$) 30,7% und bei pH 8 51,1%.

**Patentansprüche**

1. Ein Verfahren zur Herstellung von im wesentlichen einheitlichen, kugelförmigen Perlen bis zu einer Grösse von 5mm Durchmesser aus einem vernetzten, wasserunlöslichen Hydrogel durch Polymerisation in Suspension von (A) 95–30 Gewichts-%, bezogen auf das Hydrogel, mindestens eines wasserlöslichen, monoolefinischen Monomeren, das bis zu 70 Gewichts-%, bezogen auf die Totalmenge des Monomeren, durch mindestens eine wasserunlösliche monomere Verbindung ersetzt sein kann, wobei das Hydrogel höchstens 60 Gewichts-% der wasserunlöslichen monomeren Verbindung enthält, und wobei mindestens 5 Gewichts-% des Gesamtmonomeren aus einem hydroxysubstituierten hydrophilen Vinylmonomeren besteht, mit (B) 5 bis 70 Gewichts-%, bezogen auf das Hydrogel, einer endständig diolefinischen, vernetzenden Verbindung mit einem Molekulargewicht von 400–8000 in Gegenwart eines Polymerisationskatalysators in einer konzentrierten, wässrigen anorganischen Salzlösung und eines Suspensionsmittels sowie durch Behandlung des Hydrogels mit einer Säure, dadurch gekennzeichnet, dass man als Suspensionsmittel 0,01–5 Gewichts-%, basierend auf das Hydrogel, mindestens eines wasserunlöslichen, gallertartigen, wasserbindenden, anorganischen Metallhydroxides oder Metallhydrosidsalzes in Abwesenheit von überschüssigem Alkali oder freien Hydroxylionen verwendet.

2. Verfahren nach Patentanspruch 1, dadurch gekennzeichnet, dass man als Suspensionsmittel ein wasserunlösliches, gallertartiges Metallhydroxid oder Metallhydroxidsalz des Magnesiums, Aluminiums, Zirkoniums, Eisens, Nickels, Chroms, Zinks, Bleis, Calciums, Cobalts, Kupfers, Zinks, Calliums, Mangans, Strontiums, Bariums, Urans, Titans, Lanthans, Thors oder Cers verwendet.

3. Verfahren nach Patentanspruch 1, dadurch gekennzeichnet, dass man als Suspensionsmittel Magnesiumhydroxid, Aluminiumhydroxid, Magnesiumhydroxysalz oder Aluminiumhydroxysalz verwendet.

**Claims**

1. A process for producing essentially uniform spherical beads of up to 5mm diameter of a crosslinked, waterinsoluble hydrogel by suspension polymerisation of (A) 95–30% by weight, relative to the hydrogel, of at least one watersoluble, monoolefinic monomer, which can be replaced to the extent of up to 70% by weight, relative to the total amount of the monomer, by at least one water-insoluble monomeric compound, the hydrogel containing at most 60% by weight of the water-insoluble monomeric compound, and at least 5% by weight of the total monomer consisting of a hydroxyl-substituted, hydrophilic vinyl

monomer, with (B) 5 to 70% by weight, relative to the hydrogel, of a terminal diolefinic, crosslinking compound having a molecular weight of 400–8000, in the presence of a polymerisation catalyst in a concentrated, aqueous inorganic salt solution, and of a dispersing agent, and also by treatment of the hydrogel with an acid, characterised in that there is used, as dispersing agent, 0.01–5% by weight, based on the hydrogel, of at least one water-insoluble, gelatinous, water-binding, inorganic metal hydroxide or metal hydroxide salt in the absence of excess alkali or free hydroxyl ions.

2. A process according to Claim 1, characterized in that there is used, as dispersing agent, a water-insoluble, gelatinous metal hydroxide or metal hydroxide salt of magnesium, aluminium, zirconium, iron, nickel, chromium, zinc, lead, calcium, cobalt, copper, zinc, gallium, manganese, strontium, barium, uranium, titanium, lanthanum, thorium or cerium.

3. A process according to Claim 1, characterized in that there is used, as dispersing agent, magnesium hydroxide, aluminium hydroxide, magnesium hydroxide salt or aluminium hydroxide salt.

**Revendications**

1. Procédé de fabrication de perles sphériques, pratiquement uniformes, dont le diamètre peut aller jusqu'à 5mm, à partir d'un hydrogel réticulé insoluble dans l'eau, par polymérisation en suspension de (A) 95 à 30% en poids, par rapport à l'hydrogel, d'au moins un monomère mono-oléfinique soluble dans l'eau, lequel peut être remplacé, en une proportion pouvant aller jusqu'à 70% en poids par rapport à la quantité totale des monomères, par au moins un composé monomère insoluble dans l'eau, l'hydrogel contenant au maximum 60% en poids du composé monomère insoluble dans l'eau, et au moins 5% en poids de l'ensemble des monomères étant constitués d'un monomère vinylique hydrophile porteur d'un groupe hydroxy, avec (B) de 5 à 70% en poids, par rapport à l'hydrogel, d'un composé réticulant porteur de deux groupes terminaux oléfiniques et ayant un poids moléculaire de 400 à 8000, en présence d'un catalyseur de polymérisation, dans une solution aqueuse concentrée d'un sel minéral et en présence d'un agent de suspension, ainsi que par traitement de l'hydrogel par un acide, procédé caractérisé en ce qu'on utilise, comme agent de suspension, de 0,01 à 5% en poids, par rapport à l'hydrogel, d'au moins un hydroxyde métallique ou d'un hydroxy-sel métallique minéral, insoluble dans l'eau, ayant la consistance d'une gelée et capable de fixer l'eau, en l'absence d'un excès d'alcali ou d'ions hydroxyles libres.

2. Procédé selon la revendication 1 caractérisé en ce qu'on utilise, comme agent de suspension, un hydroxyde métallique ou hydroxy-sel métallique, insoluble dans l'eau et de consistance gélatineuse, du magnésium, de l'aluminium, du zirconium, du fer, du nickel, du chrome, du zinc, du plomb, du calcium, du cobalt, du cuivre, du zinc, du gallium, du manganèse, du strontium, du baryum, du l'uranium, du titane, du lanthane, du thorium ou du cérium.

3. Procédé selon la revendication 1 caractérisé en ce qu'on utilise, comme agent de suspension, l'hydroxyde de magnésium, l'hydroxyde d'aluminium, un hydroxy-sel de magnésium ou un hydroxy-sel d'aluminium.